# EUROPÄISCHE PATENTANMELDUNG

(11) **EP 0 896 195 A2**
(43) Veröffentlichungstag der Anmeldung: **10.02.1999**
(21) Anmeldenummer: 98108691.1
(22) Anmeldetag: 13.05.1998
(51) Int. Cl.: F24D 3/10

(54) **Ausdehnungsgefäss sowie Verfahren zu seiner Herstellung**

(30) Priorität: 06.08.1997 DE 19733982
(71) Anmelder: Winkelmann & Pannhoff GmbH, D-59227 Ahlen (DE)
(72) Erfinder:
(74) Vertreter: Patentanwälte Meinke, Dabringhaus und Partner

(57) **Zusammenfassung**

Ein Ausdehnungsgefäß aus Kunststoff für Heizungen oder dergl., insbesondere Wandthermen, mit einem von einer blasenförmigen Membran voneinander getrennten Wasser- und Gasraum, wobei der Wasserraum über einen Wasseranschlußstutzen an ein Wasserleitungsnetz angeschlossen ist und der Gasraum mit einem unter Druck stehenden Gas gefüllt ist, soll so verbessert werden, daß es auf möglichst einfache Weise hergestellt werden kann.

Dies wird dadurch erreicht, daß das Ausdehnungsgefäß aus einem in einem Blasformprozeß einteilig hergestellten Kunststoffkörper (1) mit einem einteilig angeformten Wasseranschlußstutzen (5) besteht, wobei die blasenförmige Membran (2) im Bereich des Wasseranschlußstutzens (5) mit einem einteilig angeformten stutzenförmigen Bereich (7) unmittelbar mit dem Wasseranschlußstutzen (5) des Kunststoffkörpers (1) dicht verbunden ist.

## Beschreibung

Die Erfindung betrifft ein Ausdehnungsgefäß nach dem Oberbegriff des Patentanspruches 1 und ein Verfahren zu seiner Herstellung nach dem Oberbegriff des Patentanspruches 4.

Derartige Ausdehnungsgefäße werden in geschlossenen Heizkreisläufen seit langem eingesetzt und haben sich bestens bewährt. Bei kleineren Heizkreisläufen für Wohnungen oder für kleinere Einfamilienhäuser kommen mehr und mehr sogenannte Wandthermen zum Einsatz, in welche derartige Ausdehnungsgefäße eingebaut sind. Diese Druckausdehnungsgefäße weisen nach einer bevorzugten Bauart eine druckfeste Außenumhüllung auf, in welcher eine ball- bzw. blasenförmige Membran angeordnet ist, die innerhalb der Umhüllung den Innenraum in einen Wasserraum innerhalb der Membran und einen Gasraum trennt, wobei der Wasserraum an den Heizkreislauf angeschlossen ist. Bei Druckausdehnung im Heizkreislauf durch Erwärmung des Wassers vergrößert sich dann das Wasservolumen innerhalb des Ausdehnungsgefäßes, wodurch sich die blasenförmige Membran innerhalb des Gasraumes ausdehnt und das in diesem Raum enthaltene Gas komprimiert wird.

Da diese Ausdehnungsgefäße für Wandthermen aufgrund des innerhalb der Therme zur Verfügung stehenden geringen Raumes sehr flach ausgebildet sein müssen, weisen sie hinsichtlich ihrer Druckstabilität eine ungünstige Gefäß-Geometrie auf. Die Schalen dieser flachen Ausdehnungsgefäße werden deshalb bisher aus Stahlblech hergestellt, da nur ein Werkstoff hoher Festigkeit bei relativ geringen Wandstärken die erforderliche Druckstabilität gewährleistet. Die Herstellung solcher Ausdehnungsgefäße aus Stahlblechschalen ist jedoch aufwendig, da diese zur Bildung des Ausdehnungsgefäßes dicht miteinander verbunden werden müssen.

Aus DE 40 08 026 A1 ist ein Ausdehnungsgefäß aus Kunststoff für Heizungs- und Wasserversorgungseinrichtungen mit einem durch eine blasenförmige Membran voneinander getrennten Wasser- und Gasraum bekannt, wobei der Anschluß des Wasserraumes an ein wasserführendes Netz über einen Wasseranschlußstutzen erfolgt und der Gasraum mit unter Druck stehendem Gas gefüllt ist. Der Kunststoffkörper des Ausdehnungsgefäßes wird in einem Formgebungsprozeß hergestellt und verfügt über einen einteilig angeformten Wasseranschlußstutzen.

Aufgabe der Erfindung ist es demgegenüber, ein derartiges Ausdehnungsgefäß so zu verbessern, daß es auf möglichst einfache Weise hergestellt werden kann.

Diese Aufgabe wird bei einem Ausdehnungsgefäß der eingangs bezeichneten Art erfindungsgemäß dadurch gelöst, daß das Ausdehnungsgefäß aus einem in einem Blasformprozeß einteilig hergestellten Kunststoffkörper mit einem einteilig angeformten Wasseranschlußstutzen besteht, wobei die blasenförmige Membran im Bereich des Wasseranschlußstutzens mit einem einteilig angeformten stutzenförmigen Bereich unmittelbar mit dem Wasseranschlußstutzen des Kunststoffkörpers dicht verbunden ist.

Mit der Erfindung wird ein Ausdehnungsgefäß aus Kunststoff zur Verfügung gestellt, welches auf ausgesprochen einfache Weise hergestellt werden kann, da nur zwei Blasformschritte erforderlich sind, nämlich zum einen zur Herstellung der blasenförmigen Membran und zum anderen zur Herstellung des Kunststoffkörpers, wobei eine sichere Funktionsfähigkeit und Abdichtung dadurch erreicht wird, daß die Membran mit ihrem stutzenförmigen Bereich als Einlegeteil direkt in den Blasformschritt zur Herstellung des Kunststoffkörpers eingebracht wird. Da der Kunststoffkörper einteilig blasgeformt wird, ist es nicht erforderlich, nach der Herstellung des Kunststoffkörpers noch weitere Montageschritte oder dergl. durchzuführen, das Ausdehnungsgefäß ist nach Abschluß des zweiten Blasformschrittes bereits im wesentlichen funktionsfähig.

In vorteilhafter Ausgestaltung ist vorgesehen, daß der stutzenförmige Bereich der Membran form- und/oder stoffschlüssig mit dem Wasseranschlußstutzen verbunden ist. Je nach den verwendeten Materialien ergibt sich dabei der Stoffschluß automatisch, wenn die Membran als Einlegeteil in den zweiten Blasformschritt eingebracht wird und dann mit dem fluiden Kunststoffmaterial für den Kunststoffkörper in Kontakt kommt.

Zur formschlüssigen Verbindung ist vorteilhaft vorgesehen, daß der stutzenförmige Bereich der Membran außenseitig mit umlaufenden Vertiefungen und/oder Erhebungen versehen ist.

Der Wasseranschlußstutzen des Kunststoffkörpers ist selbstverständlich mit einem Außengewinde oder dergl. zum Anschluß an das Leitungsnetz ausgerüstet, der bevorzugt direkt im Blasformschritt mit angeformt wird, wobei ggf. eine Nachbearbeitung erforderlich sein kann.

Die Erfindung sieht vorteilhaft auch ein Verfahren zur Herstellung des vorbeschriebenen Ausdehnungsgefäßes vor, das sich dadurch auszeichnet, daß in einem ersten Blasformschritt zunächst die Membran aus einem elastischen Kunststoff unter Ausbildung eines stutzenförmigen Bereiches geformt und anschließend in einem zweiten Blasformschritt der Kunststoffkörper mit Wasseranschlußstutzen geformt und im Bereich des Wasseranschlußstutzens gas- und wasserdicht mit der als Einlegeteil in den zweiten Blasformschritt eingebrachten Membran verbunden wird.

Erkennbar läßt sich mit diesem Verfahren auf besonders einfache und damit vorteilhafte Weise ein erfindungsgemäßes Ausdehnungsgefäß mit Membran herstellen, wobei die beiden aufeinanderfolgenden Blasformschritte in einem integrierten Prozeß unmittelbar aneinander anschließen können oder aber auch zeitlich und räumlich getrennt ablaufen können.

Besonders vorteilhaft ist dabei vorgesehen, daß im zweiten Blasformschritt gleichzeitig Befestigungshalterungen des Ausdehnungsgefäßes und/oder eine Ventilaufnahme für ein Gasventil mit angeformt werden.

Zusätzlich oder alternativ ist vorgesehen, daß im zweiten Blasformschritt der Kunststoffkörper gasdicht mit einem als Einlegeteil im zweiten Blasformschritt eingebrachten Gasventileinsatz verbunden wird. Dieses Einlegeteil wird dann natürlich an einer Stelle eingebracht, wo sich später der Gasraum des Ausdehnungsgefäßes befindet. Der Gasventileinsatz wird dabei gasdicht mit dem Kunstoffkörper verbunden, wozu er beispielsweise mindestens eine umlaufende Vertiefung aufweisen kann, die eine formschlüssige Verbindung erleichtert.

Die Erfindung ist nachstehend anhand der Zeichnung beispielsweise näher erläutert. Diese zeigt in:

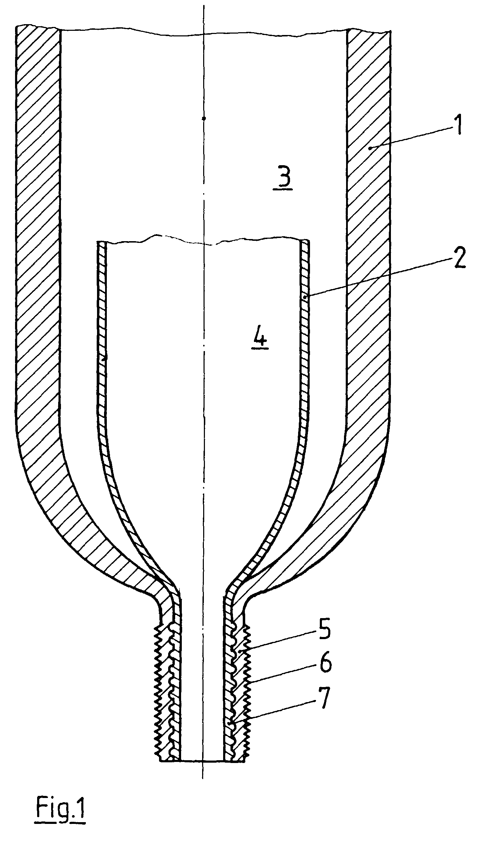

- Fig. 1: eine Teilansicht eines erfindungsgemäßen Ausdehnungsgefäßes im Längsschnitt sowie
- Fig. 2 und 3: Teilansichten, jeweils im Schnitt, die das besonders bevorzugte Herstellungsverfahren verdeutlichen.

Ein Ausdehnungsgefäß für Wandthermen besteht aus einem einzigen, in einem Blasformvorgang oder dergl. hergestellten, allgemein mit 1 bezeichneten Kunststoffkörper. Dieser Kunststoffkörper 1 ist im nicht dargestellten oberen Bereich mit Ausnahme eines Ventileinsatzes geschlossen und bildet im Inneren einen Hohlraum, welcher bereichsweise von einer blasenförmigen Membran 2 ausgefüllt ist, die den inneren Hohlraum in einen Gasraum 3 und einen Wasserraum 4 innerhalb der Membran 2 trennt. Der Gasraum 3 ist dabei in bekannter, nicht dargestellter Weise über das Gasventil mit einem unter Druck stehenden Gas, beispielsweise Stickstoff, befüllbar.

Zum Anschließen des Ausdehnungsgefäßes an das nicht dargestellte Wasserleitungsnetz weist der Kunststoffkörper 1 einen einteilig angeformten Wasseranschlußstutzen 5 auf, an welchem beim Blasvorgang vorteilhaft direkt ein Schraubgewinde 6 angeformt wird.

Zur druckdichten Befestigung der blasenförmigen Membran 2 am Kunststoffkörper 1 weist die blasenförmige Membran 2 einen einteilig angeformten stutzenförmigen Bereich 7 auf. Dieser stutzenförmige Bereich 7 ist bevorzugt außenseitig abwechselnd mit umlaufenden Vertiefungen 8 und Erhebungen 9 versehen.

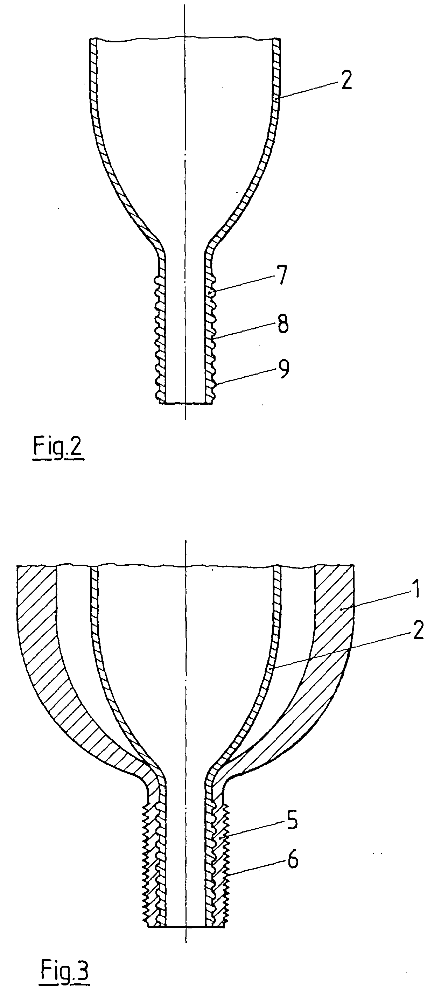

Wie aus den Figuren 2 und 3 hervorgeht, wird das Ausdehnungsgefäß bevorzugt folgendermaßen hergestellt:

In einem ersten Blasformschritt (Figur 2) wird zunächst die Membran 2 aus einem elastischen Kunststoff unter Ausbildung des stutzenförmigen Bereiches 7 geformt. Im Anschluß an diesen Formungsvorgang wird die so geformte Membran 2 als Einlegeteil in einen zweiten Blasformschritt eingebracht, in welchem der Kunststoffkörper 1 geformt wird. Dabei wird die Membran 2 mit ihrem stutzenförmigen Bereich 7 so eingelegt, daß sich der stutzenförmige Bereich 7 in dem Bereich befindet, wo anschließend der Wasseranschlußstutzen 5 des Kunststoffkörpers 1 ausgeformt wird. Dabei entsteht automatisch eine stoffschlüssige Verbindung zwischen dem stutzenförmigen Bereich 7 und dem Wasseranschlußstutzen 5, wobei zusätzlich durch die Erhebungen 9 und die Vertiefungen 8 auch noch eine formschlüssige Verbindung entsteht, die eine besonders gute druckdichte Verbindung zwischen der Membran 2 und dem Kunststoffkörper 1 herstellt.

Natürlich ist die Erfindung nicht auf das dargestellte Ausführungsbeispiel beschränkt. Weitere Ausgestaltungen sind möglich, ohne den Grundgedanken zu verlassen. So kann ggf. auf eine formschlüssige Verbindung zwischen dem Wasseranschlußstutzen 5 und dem stutzenförmigen Bereich 7 auch verzichtet oder diese auf andere Weise erreicht werden.

## Patentansprüche

1. Ausdehnungsgefäß aus Kunststoff für Heizungen oder dergl., insbesondere Wandthermen, mit einem von einer blasenförmigen Membran voneinander getrennten Wasser- und Gasraum, wobei der Wasserraum über einen Wasseranschlußstutzen an ein Wasserleitungsnetz angeschlossen ist und der Gasraum mit einem unter Druck stehenden Gas gefüllt ist,
dadurch gekennzeichnet,
daß das Ausdehnungsgefäß aus einem in einem Blasformprozeß einteilig hergestellten Kunststoffkörper (1) mit einem einteilig angeformten Wasseranschlußstutzen (5) besteht, wobei die biasenförmige Membran (2) im Bereich des Wasseranschlußstutzens (5) mit einem einteilig angeformten stutzenförmigen Bereich (7) unmittelbar mit dem Wasseranschlußstutzen (5) des Kunststoffkörpers (1) dicht verbunden ist.

2. Ausdehnungsgefäß nach Anspruch 1,
dadurch gekennzeichnet,
daß der stutzenförmige Bereich (7) der Membran (2) form- und/oder stoffschlüssig mit dem Wasseranschlußstutzen (5) verbunden ist.

3. Ausdehnungsgefäß nach Anspruch 1 oder 2,
dadurch gekennzeichnet,
daß der stutzenförmige Bereich (7) der Membran (2) außenseitig mit umlaufenden Vertiefungen (8) und/oder Erhebungen (9) versehen ist.

4. Verfahren zur Herstellung eines Ausdehnungsgefäßes nach Anspruch 1 oder einem der folgenden,
dadurch gekennzeichnet,
daß in einem ersten Blasformschritt zunächst die Membran aus einem elastischen Kunststoff unter Ausbildung eines stutzenförmigen Bereiches geformt und anschließend in einem zweiten Blasformschritt der Kunststoffkörper mit Wasseranschlußstutzen geformt und im Bereich des Wasseranschlußstutzens gas- und wasserdicht mit der als Einlegeteil in den zweiten Blasformschritt eingebrachten Membran verbunden wird.

5. Verfahren nach Anspruch 4,
dadurch gekennzeichnet,
daß im zweiten Blasformschritt gleichzeitig Befestigungshalterungen des Ausdehnungsgefäßes und/oder eine Ventilaufnahme für ein Gasventil mit angeformt werden.

6. Verfahren nach Anspruch 4 oder 5,
dadurch gekennzeichnet,
daß im zweiten Blasformschritt der Kunststoffkörper gasdicht mit einem als Einlegeteil im zweiten Blasformschritt eingebrachten Gasventileinsatz verbunden wird.
